Europäisches Patentamt

European Patent Office

Office européen des brevets

(11) Numéro de publication: **0 122 183**
**B1**

(12) **FASCICULE DE BREVET EUROPEEN**

(45) Date de publication du fascicule du brevet:
07.01.88

(51) Int. Cl.⁴: **G 09 B 23/26**

(21) Numéro de dépôt: **84400587.6**

(22) Date de dépôt: **22.03.84**

(54) Module support mécanique pour acide nucléique.

(30) Priorité: **24.03.83 FR 8305294**

(43) Date de publication de la demande:
**17.10.84 Bulletin 84/42**

(45) Mention de la délivrance du brevet:
**07.01.88 Bulletin 88/1**

(84) Etats contractants désignés:
**AT BE CH DE FR GB IT LI LU NL SE**

(56) Documents cités:
**US - A - 3 296 714**
**US - A - 3 594 924**
**US - A - 3 802 097**
**US - A - 3 903 616**
**US - A - 4 184 271**

(73) Titulaire: **ASSOCIATION AU SOUTIEN DES CHERCHEURS EXPERIMENTALISTES - A.S.C.E., Le Bas Chatel, F-35550 PIPRIAC (FR)**

(72) Inventeur: **Tchuempe Tchuente, Germain, 11, Square du Docteur Guerin, F-35000 Rennes (FR)**

(74) Mandataire: **Schrimpf, Robert et al, Cabinet Regimbeau 26, Avenue Kléber, F-75116 Paris (FR)**

ACTORUM AG

## Description

L'invention concerne un module support mécanique pour la construction des différents modèles d'acides nucléïques. Elle concerne plus particulièrement un portique, support d'une pluralité de plaques pouvant porter des accessoires, sphères et batonnets ou autres, symbolisant des bases puridiques et pyrimidiques d'une molécule d'acide ribonucléïque (ARN) et/ou d'acide desoxyribonucléïque (ADN).

Dans l'enseignement, comme dans l'industrie et dans la recherche, il est très souvent utile de faire appel à une matérialisation concrète d'une molécule, qui permet de mieux faire comprendre les mécanismes biochimiques qui, sans cela, ne peuvent être appréhendés que par des moyens d'investigations relativement sophistiqués, tels que la cristallographie, la microscopie électronique et la diffusion neutronique et l'informatique. Ces derniers moyens d'ailleurs, outre l'inconvénient qu'ils présentent de déformer la réalité, car ils conduisent le plus souvent à des représentations correspondant à des projections et non à des représentations spatiotemporelles exactes, sont de toute façon difficilement accessibles à un public insuffisamment initié.

Des modèles représentatifs de molécules d'acide nucléïque ont déjà été proposés antérieurement. Ces modèles comprennent généralement un couple de brins hélicoïdaux unis l'un à l'autre de manière à former une double hélice ayant un axe centrale commun; ces deux brins sont reliés par une série de barres de liaison qui se déduisent l'une de la suivante par une rotation/translation suivant l'axe central de la double hélice; les extrémités des barres de liaison matérialisent les bases puropyrimidiques de la molécule.

Malheureusement, une représentation de ce genre, qui figure notamment dans le brevet US-A-4 184 271, n'apparaît pas satisfaisante dans le mesure où toute duplication de la molécule n'est pas possible. En effet, chaque brin hélicoïdal ayant forcément une longueur définie, l'opération de duplication commençant en un point de la molécule modélisée ne revient jamais à ce point. Elle reste donc indéterminée, puisque le modèle n'est pas fermé à ses extrémités. Celui-ci ne peut donc pas servir à expliquer les phénomènes de reproduction, qui impliquent une division de la molécule en deux. Cet inconvénient réduit considérablement ses possibilités d'application à la recherche fondamentale et à l'interprétation de la spermatogenèse, l'ovogenèse, la reproduction des espèces animales et végétales. En outre, l'existence d'uniquement deux bases puropyrimidiques par barre de liaison apparaît incomplète, insuffisante pour réaliser la stabilité structurelle de la molécule représentée.

La présente invention a pour but de pallier ces inconvénients et concerne un outil de travail simple, facile à réaliser et à mettre en œuvre, qui permet de visualiser fidèlement une molécule biochimique telle qu'une molécule d'ARN ou d'ADN, tout en permettant la duplication de cette molécule.

Elle concerne plus précisément un module comportant au moins un support d'une pluralité de plaques destiné à porter des accessoires se présentant sous la forme de sphères symbolisant les atomes et de batonnets ou autres symbolisant les liaisons, agencés de manière à reproduire des bases puridiques et pyrimidiques d'acides nucléïques; caractérisé en ce que chacune des ces plaques comporte la matérialisation de quatre bases puropyrimidiques choisies parmi les bases puropyrimidiques (A.T.G.C.U) à savoir adenine, thymine, guanine, cytosine, uracyle, selon l'acide nucléïque considéré, et parmi les bases spéciales hydrogénées ou méthylées $\psi$, $U^{om}$, $G^{\overline{m}}$, $G^{om}$, $C^{om}$, $I^m$, $I$, $G^m$, $C^m$, $A^m$... (acide: pseudo uridylique, 2' O-méthyl uridylique, N(2) diméthyl guamylique, 2' O-méthyl cythidylique, 1 méthyl inosinique, inosine, 1 méthyl guamylique, 5 méthyl cytidylique, 6 méthyl adénylique) spécifiques pour les ARN de transferts..., ces plaques étant orientées et maintenues en place dans l'espace, l'une par rapport à l'autre, par des moyens supports solidaires du portique de telle sorte que, d'une part, la matérialisation des orbitales de liaison de coordinence partielle hydrogène entre les doublets des bases puridiques et pyrimidiques constitue une première bande de Moëbius locale, que d'autre part, la matérialisation du trajet suivi par l'information biochimique, génétique d'une base à l'autre, constitue une seconde bande de Moëbius dite bande de Moëbius globale, polymoëbiutique.

L'invention sera mieux comprise à l'aide des explications et des figures jointes parmi lesquelles:

La fig. 1 est une représentation schématique d'un portique conforme à l'invention.

La fig. 2 est un schéma illustrant la disposition dans l'espace de l'ossature du portique de la figure 1.

La fig. 3 est une représentation schématique d'une plaque support destinée à être portée par le portique de la figure 1.

La fig. 4 est une représentation schématique d'une plaque support équipée de ses accessoires.

La fig. 5 est une représentation schématique d'un portique selon la figure 1 de la plaque équipée d'accessoires combinés de manière à représenter une molécule d'ARN prise à titre d'exemple illustratif dans laquelle les numéros 1 à 84 sont remplacés par les bases puropyrimidiques concernées.

La fig. 6 est un schéma illustrant une combinaison de portiques conformes à la figure 1.

Les figures 7, 8, 9a et 9b sont des représentations schématiques des moyens assurant la solidarisation des plaques supports sur le portique de la figure 1.

La fig. 10 est une représentation schématique d'une application de l'invention.

Pour plus de clarté, les mêmes éléments portent les mêmes références dans toutes les figures.

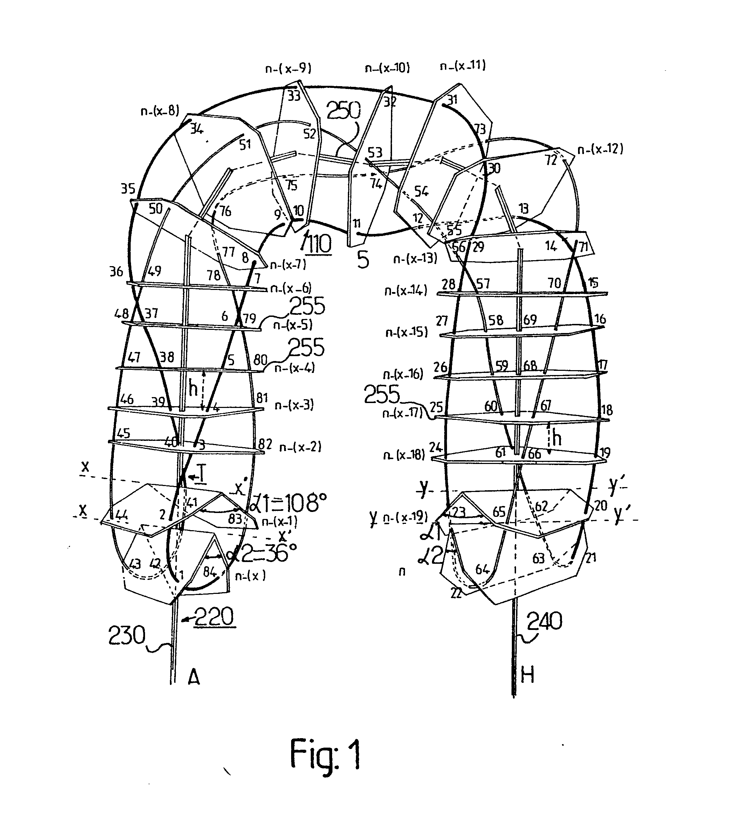

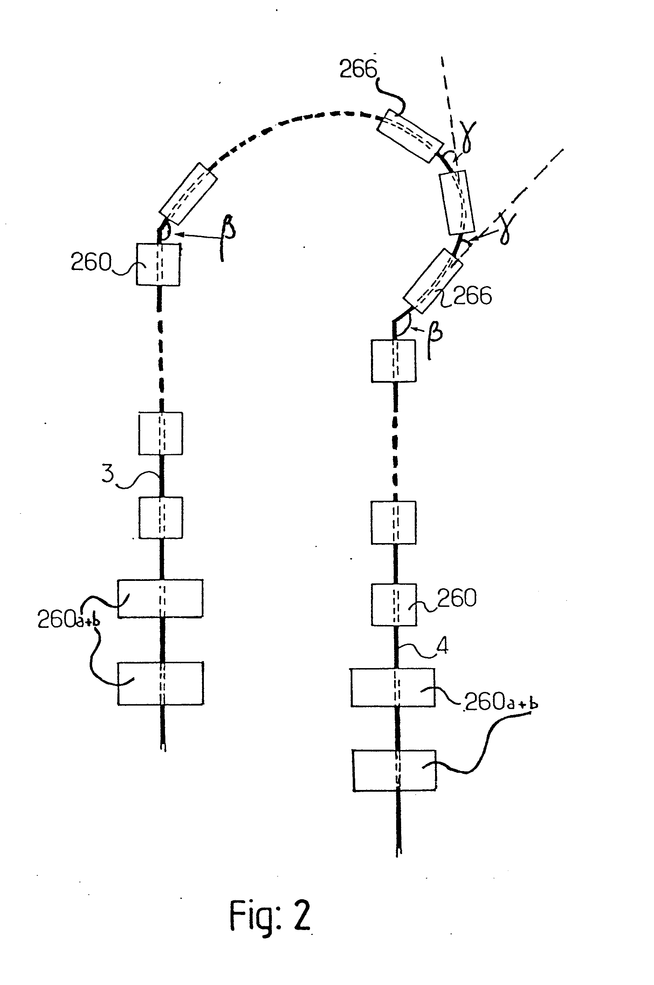

Comme le montre les figures 1 à 4, un portique 110, conforme à l'invention est essentiellement constitué d'une ossature 220 dont le profil est représenté dans l'espace sur la figure 2. Il comporte deux branches 230 et 240 parallèles et verticales qui sont reliées par une partie cintrée 250 qui est pliée de telles sorte que sa courbure fasse un angle $\beta = 144°$ (voir la figure 2 qui est une représentation schématique du portique 110). Sur cette ossature 220 sont enfilées une pluralité de plaques supports, telle que la plaque 255, maintenue en place par des pièces maintien telles que 260, 260a et 260b, et 266, comme cela sera expliqué ultérieurement.

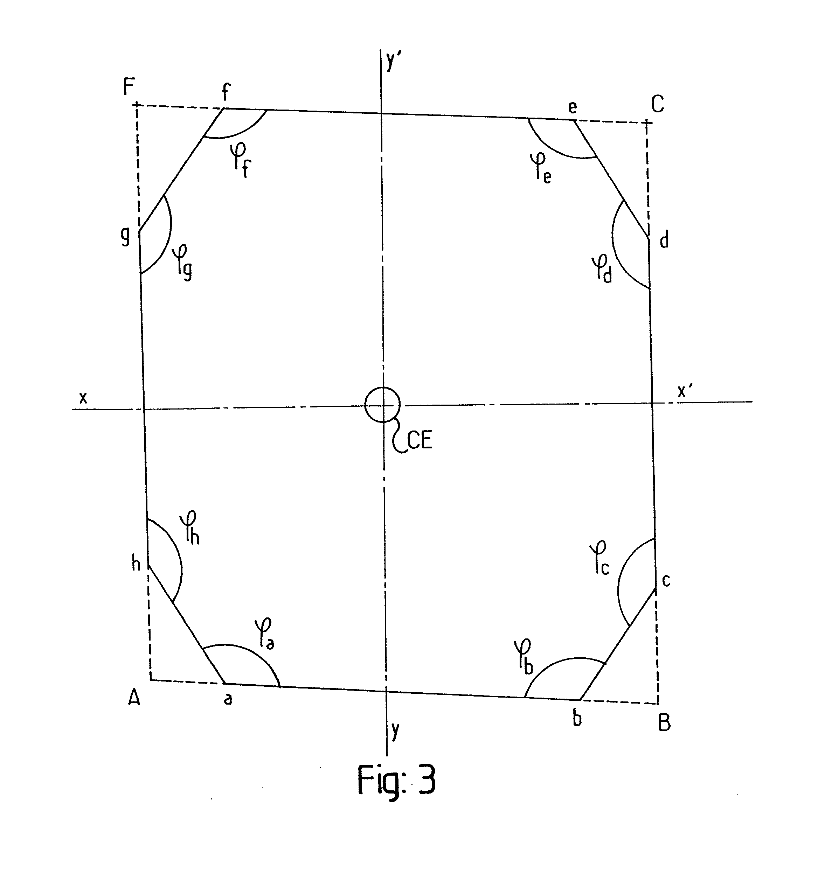

Chacune de ces plaques support 255, comme le montre la figure 3, peut être définie comme une plaque présentant 8 cotés (ab, bc, cd, de, fg, gh, ha), formant entre eux des angles $\alpha_a$, $\alpha_b$, $\alpha_c$, $\alpha_d$, $\alpha_e$, $\alpha_f$, $\alpha_g$, $\alpha_h$. Dans un exemple pratique de réalisation, les valeurs de ces angles sont les suivantes: $\alpha_a = 124°$; $\alpha_b = 121°$; $\alpha_c = 161°$; $\alpha_d = 135°$; $\alpha_e = 124°$; $\alpha_f = 121°$; $\alpha_g = 161°$; $\alpha_h = 135°$. Elle est inscriptible dans un parallélogramme A B C F dont les deux axes sont xx' et yy'. La plaque est percée en son centre $C_E$ pour pouvoir être insérée dans le portique 210.

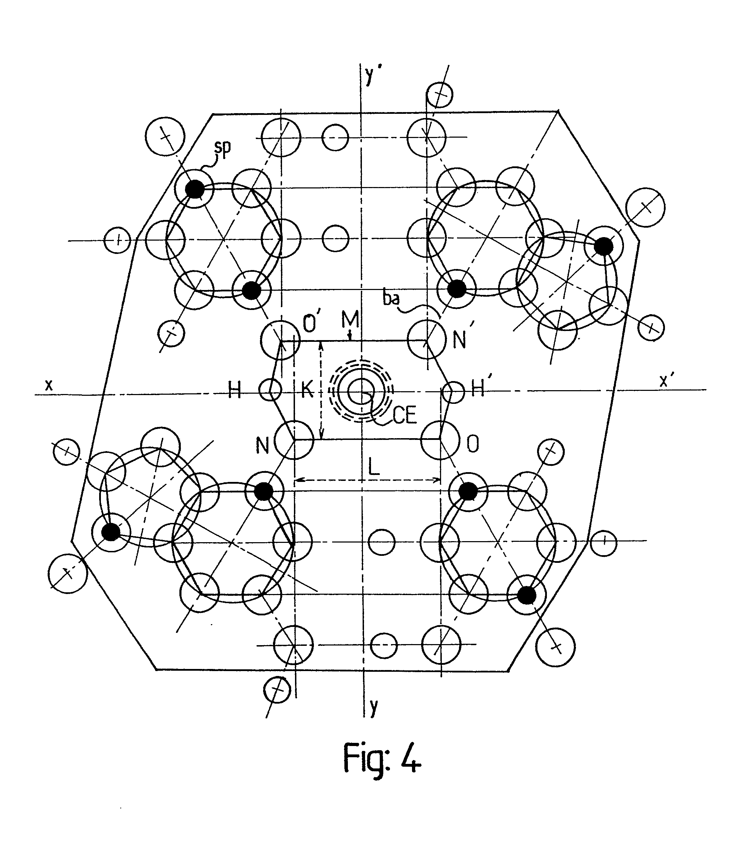

Chacune des plaques supports 255 est destinée à recevoir des accessoires constitués de sphères symbolisant les atomes et de batonnents ou autres symbolisant les liaisons, accessoires connus en eux mêmes et disponibles dans le commerce. Conformément à l'invention, et comme le montre la figure 4, chaque plaque supports 255 est équipée des sphères (sp) et de batonnets ou autres (ba) agencés de telle sorte qu'elle représente des tétracyclonucléotides formées de quatre bases prises parmi les bases puropyrimidiques (A.T.G.C.U.) adénine, thymine, guanine, cytosine, uracyle, et les suivantes telles que définies précédemment, et présentant une symétrie par rapport aux axes xx' et yy'.

Au centre de la plaque, on trouve un matérialisation M des orbitales de liaison de coordinence partielle hydrogène entre les doublets des bases puridiques et pyrimidiques. Cette matérialisation constitue, conformément à l'invention, une première bande de Moëbius dite bande de Moëbius locale par opposition à la seconde bande de Moëbius globale qui matérialise les ponts qui s'établissent entre les bases puriques et pyrimidiques de plaques en plaques comme cela sera expliqué ultérieurement.

Vue en coupe, cette matérialisation M est définie par un hexagone O' N' H' O N H dans lequel s'inscrit un parallélogramme O' N' O N inscriptible dans une ellipse de sorte que, connaissant la longueur L du parallélogramme, sa hauteur K est immédiatement déductible sachant que $K = L \cos 36°$. Les atomes d'hydrogène H H', d'oxygène O O', et d'azote N N' sont représentés.

Ces plaques supports 255 étant décrites, on poursuit la description en se référant à la figure 1, qui montre comment elles sont superposées sur l'ossature 220 du portique 1. Ces plaques sont au nombre de n numérotées de n à n–(x). Dans l'exemple décrit, x est égal à 20, et n égal à 21, et correspond aux tétracyclonucléotides de l'ARN de transfert de la sérine pris à titre d'exemple non limitatif pour mieux expliciter l'invention. La demanderesse a constaté que le nombre n de plaques pour tous les acides nucléïques est la forme: $n = 4m + 1$ ou $n = 4m + 3$, congrus à l'un des termes de la famille (1, 3, 5, 7, 9, 11, 15, 17, 19) (modulo 20).

Pour la facilité de la compréhension et une bonne progression de la description, on définit arbitrairement un côté gauche A et un côté droit H du portique 110. Les deux premières plaques supports n–(x) et n–(x-1) constituent les plaques supports dites de «fermeture gauche» définies dans le langage biochimique comme une «allofermeture». La première plaque support de fermeture gauche n–(x) est une plaque support 255 définie au moyen des figures 3 et 4, qui présente la particularité d'être pliée selon l'axe xx' en faisant un angle au sommet $\alpha_2 = 36°$. Elle coopère avec une deuxième plaque support de fermeture gauche n–(x-1) également identique aux plaques supports 255 telles que définies au moyen des figures 3 et 4, qui est, elle aussi, pliée selon l'axe xx' mais présente un angle au sommet $\alpha_1 = 108°$. A la suite de ces plaques supports de fermeture gauche n–(x); n–(x-1), sont superposés successivement sur la branche 230 verticale de l'ossature 220 du portique 110, des plaques supports n–(x-2); n–(x-3) ... placés perpendiculairement à l'axe de la branche à une hauteur déterminée (h) qui correspond en fonction de l'échelle choisie à la distance 3,4 Å représentant l'espace entre les tétracyclonucléotides. Selon une caractéristique de l'invention, chaque plaque subit dans son plan, une translation-h-rotation ponctuelle et linéaire spatiale par rapport à la plaque qui la précède dans la succession. C'est ainsi que, entre la plaque n–(x-2) et n–(x-3), si l'on prend un point de référence fixe sur chaque plaque par rapport au point d'intersection des deux axes xx' et yy', ce point aura subit une rotation d'un angle $\Phi = 36°$ d'une plaque par rapport à l'autre et une translation h. Ces angles de rotation $\Phi = 36°$ sont identiques tout le long de la progression de la superposition (convolution).

La partie cintrée est équipée de moyens 266 de fixation des plaques qui seront décrits ultérieurement.

Le long de la branche 240 du côté droit, sur la seconde partie verticale du portique on retrouve une superposition de plaques supports qui sont disposées perpendiculairement à l'axe de la branche 240 concernée à la distance (h) l'une de l'autre, et qui, dans les mêmes conditions que pour les plaques supports de la branche verticale droite 230, subissent l'une par rapport à l'autre, et successivement, une translation h et une rotation ponctuelle et linéaire d'un angle $\Phi = 36°$.

De même, au bas du portique du côté droit H, on retrouve deux plaques supports n–(x-19) et n de fermeture droite dite homofermeture (par opposition à l'allofermeture), puisque la première est une plaque support 255 pliée selon l'axe yy' avec un angle au sommet $\alpha_1 = 108°$ et que la seconde est également pliée selon l'axe yy' présentant un angle au sommet $\alpha_2 = 36°$.

En résumé, le portique 110 conforme à l'invention peut être décrit comme comportant cinq zones réparties comme suit: sur la branche gauche 230 une zone de fermeture (allofermeture) constituée par ses deux plaques de fermeture n-(x) et n-(x-1); et une zone de plaques linéaires n-(x-2) à n-(x-6) dite gauche puisque disposée perpendiculairement à la branche gauche; une zone cintrée 250 portant ses plaques n-(x-7) à n-(x-13); sur la branche droite 240, une zone linéaire dite droite puisque disposée perpendiculairement à la branche droite comportant les plaques n-(x-14) à n-(x-18); enfin, une zone de fermeture droite (homofermeture) constituée par les deux plaques de fermeture n-(x-19) et n.

Le trajet T suivi par l'information, biochimique génétique, est matérialisé sur la figure 1 par un trait tantôt plein renforcé, tantôt pointillé en double traits, tantôt en double traits pleins. Chaque base sur chaque plaque support normale 255 ou de fermeture est répertoriée par un nombre qui va croissant dans le sens de progression de la lecture unidirectionnelle de l'information. Ainsi, partant de la base 1 portée par la plaque support n-(x) de fermeture gauche, on progresse vers la base 2 portée par la plaque n-(x-1) puis 3 portée par la plaque n-(x-2), puis 4 jusqu'à 7 de la branche ascendante gauche 230. On arrive alors aux bases 8 à 14 portées par les supports 260 solidaires de la partie cintrée 250, on poursuit de 15 à 19 jusqu'aux plaques supports de fermeture droites (20, 21) pour remonter le long de la branche droite de (63, 57) du fait de l'homofermeture ce qui explique le saut de (21 à 63), puis de (62 à 50) le long de la partie cintrée 250 et de nouveau le long de la branche gauche descendante 230 de (49 à 45). Suivent ensuite les deux plaques supports de fermeture gauche (44 à 41) du fait de l'allofermeture. On suit à nouveau la branche 230 gauche ascendante (40 à 36) puis la partie 250 cintrée (35 à 29), la branche 240 droite descendante (28 à 24) puis les deux plaques supports de fermeture (23, 22, 64, 65), du fait de l'homofermeture. On continue le long de la branche 240 droite ascendante (66 à 70), la partie 250 cintrée (71 à 77), la branche 230 gauche descendante (78 à 82), et enfin les plaques supports de fermeture gauch (83, 84) et l'on retrouve le point de départ (1).

Un tel modèle conforme à l'invention montre donc que l'agencement spatiotemporel et angulaire de la molécule décrite, qui est une molécule réalisée par la succession de tétracyclonucléotides se présente sous la forme d'une bande de Moëbius globale, matérialisée par le trajet T décrit ci-dessus et dite «bande polymoëbiutique»; parce qu'il s'agit d'une bande moëbiutique présentant plus d'une torsion. De plus, il faut constater que le nombre de plaque n de la forme

$n = 4m + 1$ ou $n = 4m + 3$ défini prédédemment répond aux solutions des équations de surface, ce qui est parfaitement cohérent avec la notion de bandes de Moëbius figurant dans la présente invention. Cette branche de Moëbius globale ne doit pas être confondue avec les bandes de Moëbius locales définies précédemment.

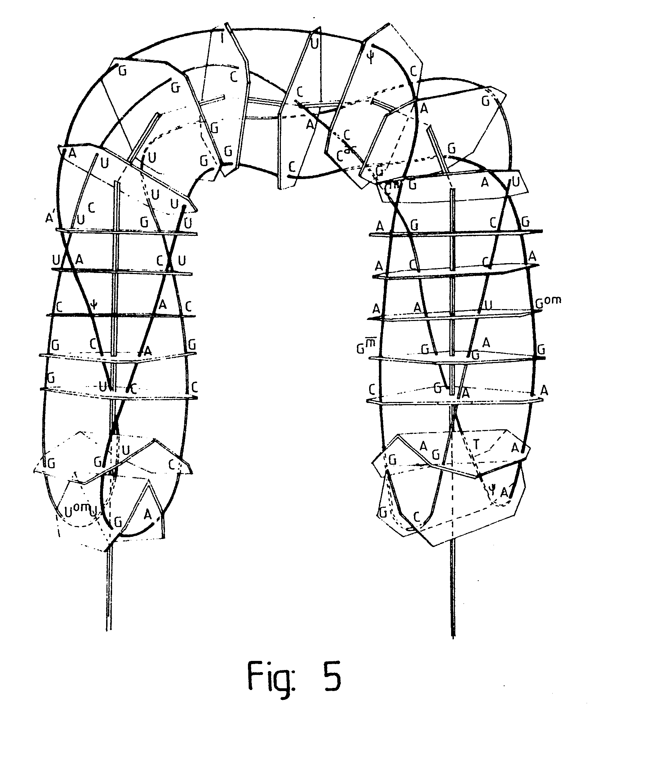

La superposition des quadruplets puropyrimidiques le long du portique défini ici s'élabore par une translation de 3,4 Å symbolisé à l'échelle de la figure 1 par un hauteur (h) de 34 mm, et une rotation de 36° dans l'espace. Cette construction amène à un pas d'hélicoïde toutes les dix plaques. Le nombre de plaques est der 21, le nombre x est égal à 20 pour le type de molécule choisi pour example, à savoir ici l'ARN de transfert de la sérine. D'ailleurs, la figure 5 est une représentation schématique déjà représentée sur la figure 1 mais dans laquelle les numéros de 1 à 84 sont remplacés par des lettres choisies parmi A.T.G.C.U, correspondant respectivement à l'adénine, la thymine, la guanine, la cytosine, l'uracyle; et les suivantes tels que définies précédemment. Leur combinaison et leur disposition sur le portique 1 conforme à l'invention conduit à une représentation correspondant aux tétracyclonucléotides de l'ARN de transfert de la sérine. C'est une illustration de l'invention au moyen d'un exemple nullement limitatif.

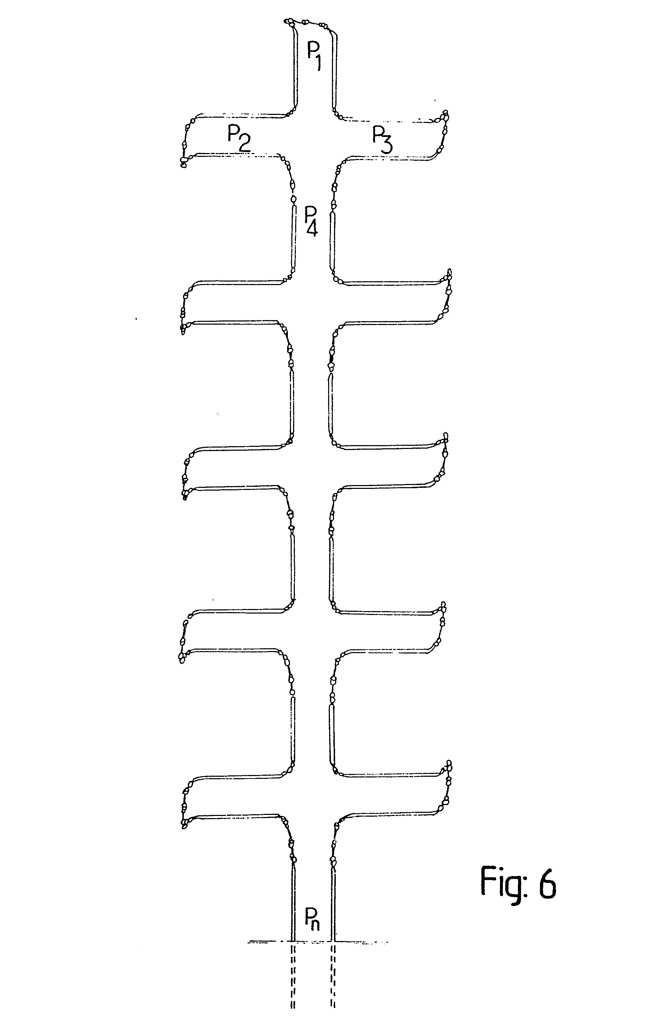

On peut aussi, en mettant en œuvre un portique 110 selon l'invention, aboutir à la représentation de la construction d'ADN comme le montre la figure 6. Il s'agit d'une combinaison de portiques conformes à l'invention et définis précédemment. On a représenté sur la figure, un exemple de disposition orthogonales de plusieurs portiques $P_1$, $P_2$, $P_3$ ... $P_4$. Pour des raisons de simplifications, on n'a pas représenté les plaques sur la figure 6, mais il est bien évident qu'elles trouvent leur place et leur orientation de la même façon que dans les figures précédemment décrites.

En faisant varier n, il est donc possible de traiter la construction, conformément à l'invention de toutes formes d'acides nucléiques comme le montre le tableau ci-après.

| Nombre de plaques | Nombre de bases | Acides nucléiques | |
|---|---|---|---|
| n | B = 4n | ARN | ADN |
| 21 | 84 | transfert sérine | – |
| 81 | 324 | messager (histone) | – |
| 87 | 348 | messager (histone) | – |
| 105 | 420 | – | nuclésosome |
| 1347 | 5388 | – | Virus $\varphi \times 174$ |
| 2613 | 10 452 | – | Virus SV40 |
| 8169 | 32 676 | – | mitochondries des cellules Hela |

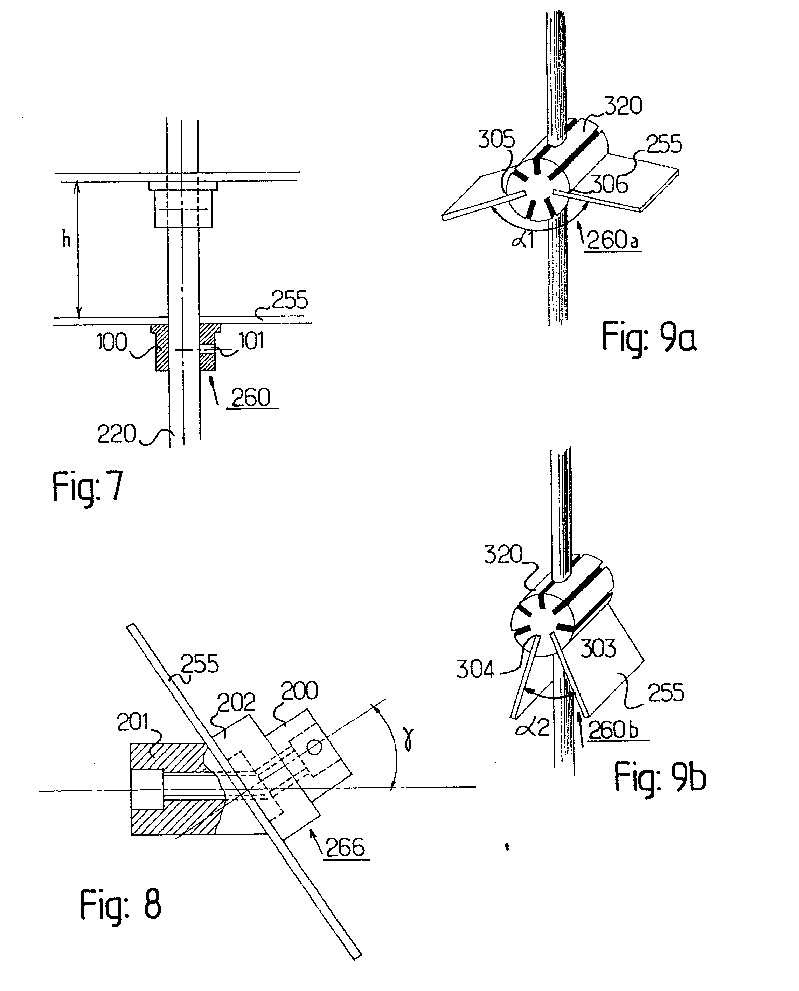

Les figures 7, 8, 9a et 9b sont des exemples de réalisations de moyens de liaison destinés à rendre les plaques 255 solidaires du portique 110 de l'invention.

La figure 7 représente un moyen de liaison 260 comportant une butée 100 capable de coulisser le long des branches droites 230 et 240 de l'ossature 220 et d'être bloquée par une vis pointeau 101 à la bonne hauteur, définie par la hauteur (h) dont il a été question précédemment. La plaque 255 est collée sur cette butée 100.

La figure 8 représente schématiquement un moyen de liaison 266 destiné à rendre solidaire les plaques 255 de la partie cintrée 250 du portique 110. Il s'agit d'un exemple de réalisation qui comporte deux pièces femelles 200 et 201, reliées l'une à l'autre au moyen d'une platine 202, les deux axes de ces deux pièces femelles faisant entre eux un angle $\gamma$ qui, dans l'exemple choisi, est égal à 36°, tels que 180°$-\gamma = \beta = 144$°. Ces deux pièces 200 et 201 sont destinées à recevoir les éléments de l'ossature 220 constituant la partie cintrée 250 du portique 110, la platine 202 étant elle-même destinée à recevoir une plaque 255.

Les figures 9a et 9b représentent un exemple de réalisation d'un moyen de liaison 260a, 260b, capable de positionner selon le bon angle $\alpha_1$ et $\alpha_2$ les plaques de fermetures du côté droit comme du côté gauche. Il s'agit d'un cylindre 320 muni de 10 rainures dont on a seulement fait figure sept pour une meilleure clarté de la figure. Symétriquement, une demie plaque 255 coupée selon l'axe xx' ou yy' est insérée dans chacune des deux rainures 303 et 304 qui font entre elles un angle $\alpha_2 = 36$°, et dans chacune des deux rainures 305 et 306 qui font entre elles un angle $a_1$ de 108°. Ce cylindre est alésé pour pouvoir coulisser dans les branches 230 et 240 avant d'être bloqué par tout moyen connu, par exemple une vis pointeau non représentée sur la figure.

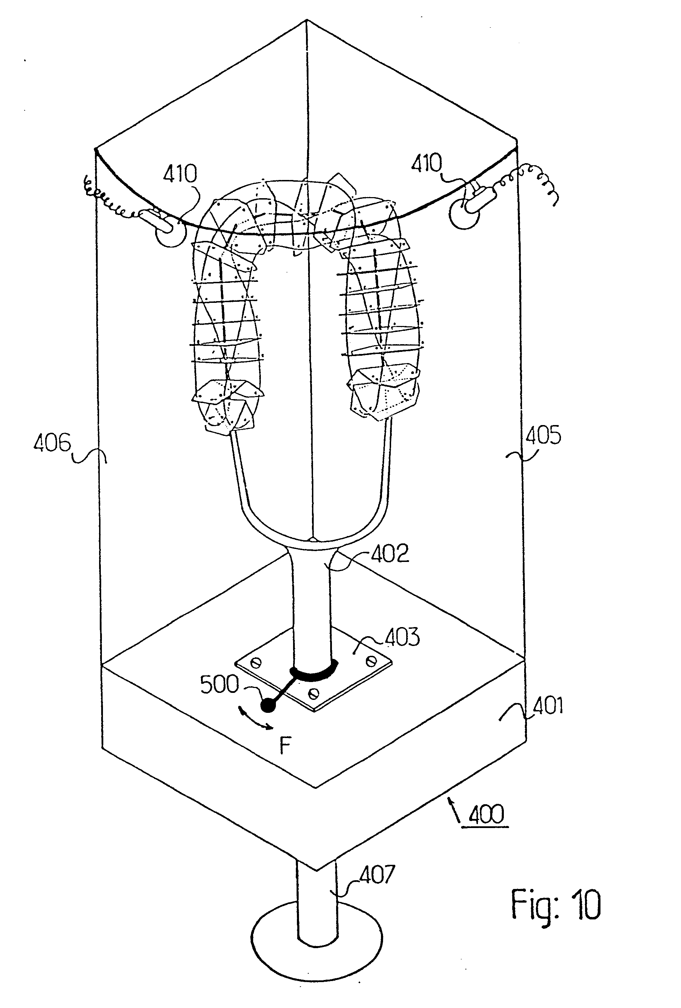

La figure 10 est une représentation schématique d'une embase 400 destinée à recevoir un portique 110 conforme à l'invention seulement stylisé sur cette figure. Cette embase 400 est constituée d'un socle 401 fixe solidaire d'une platine 403 dans laquelle un axe 402 portant le portique 110 est maintenue de telle sorte que ce dernier puisse être entraîné en rotation comme le montre la flèche F par tout moyen connu 500. Cette platine repose sur un pied 407. Ce socle 401 porte des parois 405 et 406 faisant entre eux un angle droit et dont la caractéristique est de pouvoir servir d'écran de projection. En effet, un moyen d'éclairement 410 tel qu'un spot orientable est prévu pour éclairer sous un angle d'incidence déterminé le portique 110 avec ses plaques 255 garnies de leurs accessoires. Lorsque l'on fait tourner le portique, on obtient sur les écrans 405 et 406 une projection de molécule matérialisée conformément à l'invention et l'expérience montre que les projections obtenues reproduisent les profils en L et en gamma déjà constatées lors des investigations de ce type de molécule par des moyens sophistiques tels que la cristallographie ou la diffusion neutronique.

Le module conforme à l'invention est donc bien un outil, support mécanique, facilitant la construction des différents modèles d'acides nucléïques.

## Revendications

1. Module comportant au moins un portique (110), support d'une pluralité de plaques (255) portant des accessoires se présentant sous la forme de sphères symbolisant les atomes et de batonnets, ou autres, symbolisant les liaisons, agencés de manière à reproduire des bases puridiques et pyrimidiques d'acides nucléïques; caractérisé en ce que chacune de ces plaques (255) comporte la matérialisation de quatre bases puropyrimidiques choisies parmi les bases puropyrimidiques (A.T.G.C.U.), à savoir adénine, thymine, guanine, cytosine, uracyle; et parmi les bases spéciales hydrogénées ou méthylées $\psi$, $U^{om}$, $G^{\bar{m}}$, $G^{om}$, $C^{om}$, $I^m$, I, $G^m$, $C^m$, $A^m$ ... (acide) pseudo uridyliques, 2' O-méthyl uridylique, N(2) diméthyl-guamylique, 2' O-méthyl cythidilique, 1 méthyl inosinique, inosine, 1 méthyl guamylique, 5 méthyl cytidylique, 6 méthyl adénylique ...) selon l'acide nucléïque considéré, ces plaques (255) étant orientées et maintenues en place dans l'espace, l'une par rapport à l'autre, par des moyens solidaires du portique (110) de telle sorte que, d'une part, la matérialisation (M) des orbitales de liaison de coordinence partielle hydrogène entre les doublets des bases purimidiques et pyrimidiques constitue une première bande de Moëbius dite bande de Moëbius locale, que d'autre part, la matérialisation (T) du trajet suivi par l'information, biochimique génétique, d'une base à l'autre, de plaques en plaques, constitue une seconde bande de Moëbius dite bande de Moëbius globale, polymoëbiutique.

2. Module selon la revendication 1, caractérisé en ce que le portique (110) comporte une ossature (220) ayant un côté gauche (A) et droit (H) auxquels correspondent respectivement une branche droite (230) et (240) celles-ci étant reliées entre elles au moyen d'une partie cintrée (250) qui est pliée de telle sorte que sa courbure fasse un angle $\beta$, ce portique étant équipé de moyens supports de plaques (260), (260a), (260b) et (266).

3. Module selon la revendication 2, caractérisé en ce que cet angle $\beta$ est égal à 144°.

4. Module selon l'une des revendications précédentes caractérisé en ce que chacune des plaques (255) qui comporte huit côtés (ab, bc, cd, de, ef, fg, gh,ha), formant entre eux des angles ($\alpha_a$, $\alpha_b$, $\alpha_c$, $\alpha_d$, $\alpha_e$, $\alpha_f$, $\alpha_g$, $\alpha_h$, $\alpha_g$) est inscriptible dans un parallélogramme (A B C F) ayant un premier axe (xx'), un second axe (yy') et un orifice ($C_E$) centré sur l'intersection de ces deux axes (xx') et (yy') et destiné à permettre la liaison de la plaque avec les moyens supports (260), (260a) et (266).

5. Module selon la revendication 4, caractérisé en ce que chaque plaque est équipée de sphères (sp) et de batonnets (ba) ou autres disposés de manière à représenter quatre bases présentant une symétrie par rapport aux axes (xx') et (yy').

6. Module selon la revendication 5, caractérisé en ce que les liaisons de coordinence hydrogène sont réalisées au moyens d'une représentation d'une combinaison d'atomes d'hydrogène (H, H'), d'oxygène (O, O') et d'azote (N, N') formant un hexagone (O' N' H' O N H) dans lequel s'inscrit un parallèlogramme (O N' O N) inscriptible dans une ellipse de telle sorte que, pour la construction d'une plaque, connaissant la longueur (L) du parallélogramme, sa hauteur (K) est immédiatement déductible par la formule $K = L \cos 36°$.

7. Module selon l'une des revendications précédentes, caractérisé en ce que les plaques (255) sont au nombre de (n), numérotées successivement depuis la première plaque portée par la branche droite (230) du côté gauche (A) de l'ossature (220) jusqu'à la dernière plaque de la branche droite du côté droit (H): n–(x–1); n–(n–1); n–(x–2) . . . n–1 et n.

8. Module selon la revendication 7, caractérisé en ce que (n) est de la forme: $n = 4m + 1$ ou $n = 4m + 3$, congrus à l'un des termes de la famille (1, 3, 5, 7, 9, 11, 15, 17, 19) (modulo 20).

9. Module selon l'une des revendications précédentes, caractérisé en ce que les deux premières plaques n–(x) et n–(x–1) portées par la branche (230) du côté gauche (A) de l'ossature (220) et les deux dernières plaques (n–1) et (n) portées par la branche (240) du côté droit (H) de l'ossature (220) sont pliées selon l'axe (xx') pour les deux premières, et l'axe (yy') pour les deux dernières selon des angles ($\alpha_1$ et $\alpha_2$); ces deux dernières plaques constituant respectivement des plaques de fermeture du type allofermeture pour le côté gauche (A) et homofermeture pour le côté droit (H).

10. Module selon la revendication 9, caractérisé en ce que les angles $\alpha_1 = 108°$ et les angles $\alpha_2 = 36°$.

11. Module selon l'une des revendications précédentes, caractérisé en ce que les plaques portées sur les parties droites des branches (230 et 240), autre que les plaques de fermeture n–(x), n–(x–1); n–1, n sont disposées perpendiculairement les unes par rapport aux autres à une distance (h) constante; chacune des plaques subissant une translation–h–rotation selon un angle $\Phi$ par rapport à la plaque qui la précède.

12. Module selon la revendication 11, caractérisé en ce que cet angle $\Phi = 36$ et cette distance (h) est à l'échelle proportionnelle à 3,4 Å.

13. Module selon l'une des revendications précédentes, caractérisé en ce que tout le long de la partie cintrée (250), les moyens supports (266) comportant deux pièces femelles (200) et (201) dont les axes font entre eux un angle $\gamma = 36°$ tels que $180° - \gamma = \beta = 144°$; chacune de ces plaques subissant une rotation par rapport à la précédente d'un angle $\Phi = 36°$.

14. Module selon l'une des revendications précédentes, caractérisé en ce que le nombre n de plaques est de 21 et x est égal à 20 ce qui correspond à l'ARN de transfert de la sérine.

15. Module selon l'une des revendications 1 à 14, caractérisé en ce qu'il comporte une pluralité de portique (110) ($P_1$, $P_2$, $P_3$ . . . Pn) disposés orthogonalement.

16. Module selon la revendication 15, caractérisé en ce que cette pluralité de portiques (110) correspond à la représentation d'un modèle de molécule d'ADN, ou de nucléoprotéine.

17. Embase mobile (400) destinée à recevoir un portique (110) conforme à l'une des revendications précédentes, caractérisée en ce qu'il comporte: un socle (401) portant une platine (403) dans laquelle peut tourner un axe (402) support d'un portique (110), et des moyens d'éclairement orientables (410) capables s'assurer une projection de l'ensemble sur deux écrans (405, 406) disposés à angle droit et solidaires du socle (401).

18. Embase selon la revendication 17, caractérisée en ce que l'axe (402) étant mis en rotation, le moyen d'éclairement (410) est orienté de telle sorte qu'apparaissent sur l'un et l'autre des deux écrans une projection en forme de gamma et de L caractéristique de la molécule matérialisée sur le portique.

**Patentansprüche**

1. Modul mit mindestens einem Gerüst (110), welches mehrere Platten (255) zum Tragen von Zubehörteilen in Form von Kugeln, welche Atome symbolisieren, und von Stäbchen oder dgl., welche Bindungen symbolisieren, unterstützt, die derart angeordnet sind, dass sie Puridinbasen und Pyrimidinbasen der Nukleinsäure nachbilden, dadurch gekennzeichnet, dass jede Platte (255) die Darstellung von vier Puropyrimidin-Basen aufweist, welche unter den folgenden Paropyrimidin-Basen (A.T.G.C.U), nämlich Adenin-, Thymin-, Guanin-, Cytosin-, Uracil-Puropyrimidin-Basen, und unter den hydrierten oder methylierten Spezialbasen ψ, $U^{om}$, $G^{\bar{m}}$, $G^{om}$, $C^{om}$, $I^m$, I, $G^m$, $C^m$, $A^m$, . . . (Pseudo-Uridylin-, 2'-O-Methyl-Uridylin-, N(2)-Dimethyl-Guamylin-, 2'-O-Methyl-Cythidylin-, 1-Methyl-Inosin, Inosin-, 1-Methyl-Guamylin-, 5-Methyl-Cytidylin-, 6-Methyl-Adenylin-Säure) je nach der betrachteten Nukleinsäure ausgewählt sind, wobei die Platten (255) so zueinander orientiert und im Raum von mit dem Gerüst (110) festen Mitteln gehalten sind, dass einerseits die Darstellung (M) der Bindeglieder für die partielle Wasserstoffbindung zwischen den Basenresten der Purimidin- und Pyrimidinbasen ein erstes Moebius-Band, genannt lokales Moebius-Band, und andererseits die Darstellung (T) der Querbindungen zur Übermittlung biochemischer genetischer Information von einer Base zur anderen von Platte zu Platte ein zweites Moebius-Band, genannt globales Moebius-Band, polymoebiusisch aufweist.

2. Modul nach Anspruch 1, dadurch gekennzeichnet, dass das Gerüst (102) ein Gerippe (220) mit einer linken Seite (A) und einer rechten Seite (H) aufweist, zu denen je ein rechter Zweig (230 und 240) korrespondieren, welche miteinander über einen gebogenen Zweig (250) verbunden sind, der so gebogen ist, dass seine Krümmung einen Winkel β einschliesst, wobei das Gerüst mit Stützmitteln zum Unterstützen der Platten (260, 260a, 260b und 266) ausgestattet ist.

3. Modul nach Anspruch 2, dadurch gekennzeichnet, dass der Winkel β 144° beträgt.

4. Modul nach einem der vorangehenden Ansprüche, dadurch gekennzeichnet, dass jede Platte (255) acht Seiten (ab, bc, cd, de, ef, fg, gh, ha) aufweist, die zwischen sich Winkel ($\alpha_a$, $\alpha_b$, $\alpha_c$, $\alpha_d$, $\alpha_e$, $\alpha_f$, $\alpha_g$, $\alpha_h$, $\alpha_g$) einschliessen und ein Parallelogramm (A B C F) mit einer ersten Achse (xx'), einer zweiten Achse (yy') und einer Öffnung ($C_E$) umschreibt, welche im Schnittpunkt der beiden Achsen (xx') und (yy') liegt und dazu bestimmt ist, die Verbindung der Platte mit den Stützmitteln (260, 260a und 266) zu gestatten.

5. Modul nach Anspruch 4, dadurch gekennzeichnet, dass jede Platte mit Kugeln (sp) und Stäbchen (ba) oder dgl. versehen ist, die so angeordnet sind, dass sie vier Basen repräsentieren, wobei eine Symmetrie bezüglich der Achsen (xx') und (yy') gewahrt ist.

6. Modul nach Anspruch 5, dadurch gekennzeichnet, dass die Wasserstoffbindungen mittels einer Darstellung der Kombination von Wasserstoffatomen (H, H'), Sauerstoffatomen (O, O') und Stickstoffatomen (N, N') realisiert sind, die ein Sechseck (O' N' H' O N H) bilden, in welches ein Parallelogramm (O N O' N') in einer Ellipse derart einbeschrieben ist, dass zur Bildung einer Platte in Kenntnis der Parallelogramm-Länge (L) die Parallelogramm-Höhe (K) unmittelbar aus der Formel K = L cos 36° bestimmbar ist.

7. Modul nach einem der vorangehenden Ansprüche, dadurch gekennzeichnet, dass die Platten (255) die Anzahl (n) aufweisen und sukzessiv beginnend mit der ersten vom rechten Zweig (230) der linken Seite (A) des Gerippes (220) bis zur letzten Platte des rechten Zweiges auf der rechten Seite (H) wie folgt numeriert sind: n-(x-1); n-(n-1); n-(x-2) . . . n-1 und n.

8. Modul nach Anspruch 7, dadurch gekennzeichnet, dass (n) die folgende Form aufweist: n = 4m + 1 oder n = 4m + 3, kongruent zu einem Ausdruck aus der Familie (1, 3, 5, 7, 9, 11, 15, 17, 19) (modulo 20).

9. Modul nach einem der vorangehenden Ansprüche, dadurch gekennzeichnet, dass die beiden ersten Platten n-(x) und n-(x-1), welche von dem Zweig (230) der linken Seite (A) des Gerippes (220) getragen sind, bezüglich der Achse (xx'), und die beiden letzten Platten (n-1) und (n), die von dem Zweig (240) der rechten Seite (H) des Gerippes (220) getragen sind, bezüglich der Achse (yy') um Winkel ($\alpha_1$ und $\alpha_2$) gefaltet sind, wobei die beiden letzten Platten je einen Alloverschluss für die linke Seite (A) und einen Homoverschluss für die rechte Seite (H) bilden.

10. Modul nach Anspruch 9, dadurch gekennzeichnet, dass die Winkel $\alpha_1$ = 108° und $\alpha_2$ = 36° sind.

11. Modul nach einem der vorhergehenden Ansprüche, dadurch gekennzeichnet, dass die von den rechten Partien der Zweige (230 und 240) getragenen Platten ausser den Verschliessplatten n-(x), n-(x-1); n-1 n senkrecht zu den Zweigen mit konstantem Abstand (h) angeordnet sind, wobei jede Platte bezüglich einer vorangehenden Platte mit dem Abstand h in Translation und einem Verdrehungswinkel Φ in Rotation angeordnet ist.

12. Modul nach Anspruch 11, dadurch gekennzeichnet, dass der Verdrehungswinkel Φ = 36° beträgt und dass der Abstand (h) massstäblich proportional zu 3, 4, Å ist.

13. Modul nach einem der vorangehenden Ansprüche, dadurch gekennzeichnet, dass entlang dem gebogenen Zweig (250) die Stützmittel (266) zwei weibliche Teile (200 und 201) umfassen, deren Achsen zwischen sich einen Winkel γ = 36° bilden, so dass 180° – γ = β = 144° ist, wobei jede dieser Platten eine Verdrehung bezüglich der vorausgehenden Platte um einen Winkel Φ = 36° aufweist.

14. Modul nach einem der vorangehenden Ansprüche, dadurch gekennzeichnet, dass die Anzahl der Platten n = 21 ist und x = 20 beträgt, was einer Ribonukleinsäure des Übergangs des Serin entspricht.

15. Modul nach einem der Ansprüche 1 bis 14, dadurch gekennzeichnet, dass sie mehrere Gerüste (110) ($P_1$, $P_2$, $P_3$ . . . $P_n$) aufweist, die orthogonal angeordnet sind.

16. Modul nach Anspruch 15, dadurch gekennzeichnet, dass die mehreren Gerüste (110) einer Darstellung eines Molekülmodells der Desoxiribonukleinsäure oder des Nukleoproteins entsprechen.

17. Bewegliche Halterung (400) zur Aufnahme eines Gerüstes (110) nach einem der vorangehenden Ansprüche, dadurch gekennzeichnet, dass sie umfasst: einen Sockel (401), der eine Platine (403) trägt, in welcher eine Welle (402) zum Unterstützen eines Gerüstes (110) drehen kann, und ausrichtbare Beleuchtungsmittel (410), welche eine Projektion der Anordnung auf zwei Bildschirme (405, 406) gewährleisten, welche unter rechtem Winkel zueinander und fest mit dem Sockel (401) angeordnet sind.

18. Halterung nach Anspruch 17, dadurch gekennzeichnet, dass bei Drehen der Welle (402) die Beleuchtungsmittel (410) derart orientiert sind, dass auf den beiden Bildschirmen jeweils eine Projektion in Gamma- und L-Charakteristik des auf dem Gerüst dargestellten Moleküls erscheinen.

**Claims**

1. Module comprising at least one frame (110) support of a plurality of plates (255) carrying accessoires having the form of spheres symbolizing atoms and rods, etcetera, symbolizing bonds, arranged in such a manner as to reproduce puridic or pyramid-shaped bases of nucleic acids; characterized in that each of the plates (255) comprises the materialization of four puro-pyramid-like bases selected from puro-pyramidic bases (A.T.G.C.U.), namely adenine, thymine, guanine, cytosine, uracyle; and from special hydrogenated or methylated bases $\psi$, $U^{om}$, $G^{\overline{m}}$, $G^{om}$, $C^{om}$, $I^m$, I, $G^m$, $C^m$, $A^m$, ... (acid: pseudo-uridylic, 2' O-methyl uridylic, N(2) dimethyl guamylic, 2' O-methyl cythidylic, 1 methyl inosinic, isonine, 1 methyl guamylic, 5 methyl cytidylic, 6 methyl adenylic ...) according to the nucleic acid considered, these plates (255) being orientated and held in place in space, one with respect to the other, by means rigid with the frame (110) in such a manner that, on the one hand, the materialisation (M) of the orbital linkages for partial hydrogen coordination hydrogen between the doublets of the purimidic and pyramidic bases constitute a first Moebius band termed the local Moebius band, that on the other hand, the materialisation (T) of the path followed by the instructions, biochemical genetic, from one base to the other, from plates to plates, constitute a second Moebius band termed global Moebius band, which is polymoebiutic.

2. Module according to claim 1, characterized in that the frame (110) comprises a structure (220) having a left side (A) and a right side (H) to which correspond respectively a right branch (230) and (240), the latter being interconnected by means of a curved part (250) which is folded so that its curvature makes an angle $\beta$, this structure being equipped with support means for the plates (260), (260a), (260b) and (266).

3. Module according to claim 2, characterized in that the angle $\beta$, is equal to 144°.

4. Module according to one of the preceding claims characterized in that each of the plates (255) which comprises eight sides (ab, bc, cd, de, ef, fg, gh, ha), forming between themselves angles ($\alpha_a$, $\alpha_b$, $\alpha_c$, $\alpha_d$, $\alpha_e$, $\alpha_f$, $\alpha_g$, $\alpha_h$, $\alpha_g$) is inscribable within a parallelogram (A B C F) having a first axis (xx'), a second axis (yy') and an opening ($C_E$) centred on the intersection of the two axes (xx') and (yy') and intended to enable the linkage of the plate with the support means (260), (260a) and (266).

5. Module according to claim 4, characterized in that each plate is equipped with spheres (sp) and rods (ba) etcetera arranged so as to represent four bases having a symmetry with respect to the axes (xx') and (yy').

6. Module according to claim 5, characterized in that the linkages for the coordination of hydrogen are provided by means of a representation of a combination of hydrogen atoms (H, H'), oxygen (O O') and nitrogen (N, N') forming a hexagon (O' N' H' O' N H) in which is inscribed a parallelogram (O N O' N') inscribed within an ellipse in such a manner that for the construction of one plate, knowing the length (L) of the parallelogram, its height (K) is immediately deducible from the formula $K = L \cos 36°$.

7. Module according to one of the preceding claims, characterized in that the plates (255) are (n) in number, numbered successively from the first plate carried by the right branch (230) of the left side (A) of the structure (220) up to the last plate of the right branch of the right side (H): n–(x–1); n–(n–1); n–(x–2) ... n–1 and n.

8. Module according to claim 7, characterized in that (n) is of the form: n = 4m + 1 or n + 4m + 3, congruent with one of the terms of the family (1, 3, 5, 7, 9, 11, 15, 17, 19) (module 20).

9. Module according to one of the preceding claims characterized in that the two first plates n–(x) and n–(x–1) carried by the branch (230) of the left side (A) of the structure (220) and the two last plates (n–1) and (n) carried by the branch (240) of the right side (H) of the structure (220) are folded on the axis (xx') for the two first, and the axis (yy') for the two last at angles ($\alpha_1$ and $\alpha_2$); these last two plates respectively constituting closure plates of the allo-closure type for the left side (A) and homo-closure type for the right side (H).

10. Module according to claim 9, characterized in that the angles $\alpha_1 = 108°$ and the angles $\alpha_2 = 360°$.

11. Module according to one of the preceding claims, characterized in that the plates carried on the right parts of the branches (230 and 240), other than the plates of closure n–(x), n–(x–1); n–1, n are disposed perpendicularly to one another at a constant distance (h); each of the plates undergoing a translation–h–rotation through an angle $\Phi$ with respect to the plate which preceeds it.

12. Module according to claim 11, characterized in that the angle $\Phi = 36°$ and the distance (h) is on the proportional scale to 3.4 Å.

13. Module according to one of the preceding claims characterized in that along the whole length of the curved part (250), support means (266) comprise two female parts (200) and (201) of which the axes define between them an angle $\gamma = 36°$ such that $180° – \gamma = \beta$ 144°; each of the plates undergoing a rotation with respect to the preceding one through an angle such that $\Phi = 36°$.

14. Module according to one of the preceding claims characterized in that the number n of plates is 21 and x is equal to 20 which corresponds to the ARN for the transfer of the serine.

15. Module according to one of claims 1 to 14, characterized in that it comprises a plurality of frames (110) ($p_1$, $p_2$, $p_3$ ... pn) disposed orthogonally.

16. Module according to claim 15, characterized in that the plurality of frames (110) correspond to the representation of a model of a molecule of ADN, or of nucleo-protein.

17. Mobile base plate (400) intended to receive a frame (110) in accordance with one of the preceding claims, characterized in that it comprises: a stand (410) carrying a small plate (403) in which a shaft (402) supporting a frame (110) can turn, and orientatable lighting means (410) capable of providing a projection of the assembly on two screens (405, 406) disposed at right angles and rigid with the stand (401).

18. Base according to claim 17, characterized in that the shaft (402) having been rotated, the lighting means (410) is orientated in such a manner that on one and the other of the two screens a projection is shown in the form of gamma and of L characteristic of the molecule materialised on the framework.

Fig: 1

Fig: 2

Fig: 3

Fig: 4

Fig: 5

P₁

P₂          P₃

P₄

Pₙ

Fig: 6

Fig: 7

Fig: 9a

Fig: 8

Fig: 9b

410

410

406

405

402

403

500

F

401

400

407

Fig: 10